# EUROPEAN PATENT APPLICATION

(11) **EP 1 254 829 A1**
(43) Date of publication of application: **06.11.2002**
(21) Application number: 01110636.6
(22) Date of filing: 30.04.2001
(51) Int. Cl.: B62H 1/02

(54) **Actuator device for operating a motorcycle stand**

(71) Applicant: Doveri, Marco, I-56025 Pontedera (Pisa) (IT)
(72) Inventor: Doveri, Marco, I-56025 Pontedera (Pisa) (IT)
(74) Representative: Celestino, Marco

(57) **Abstract**

An actuating device (1) for the rotation of a stand (4) of a motorcycle (2) between a standing position and a rest position folded under the vehicle and allowing also the reverse manoeuvre in order to rotate the stand from the position of vehicle on the stand up to that in which the vehicle lowers spontaneously. At least one hydraulic actuator (1) is provided that operates between a first and a second position an actuating member (7) or stem that engages with the stand (4) up to bringing it respectively from the rest position to the standing position. A flow control hydraulic circuit delivers liquid in pressure to the actuator (1) for moving the actuating member (7) from the first to the second position, and allows the back stroke of the actuating member (7) to the first position when the flow of the liquid ceases, whereby the stand (4) can be brought back to said rest position independently from the actuating member (7). When the stand is in the standing position and the actuating member (7) has turned back to the first position means are provided operated by the actuator (1) for starting the return rotation of the stand (4) from the standing position to the rest position up to a point wherein it is not necessary to bear the weight of the vehicle for carrying out the rotation. The actuator is particularly suitable for handling the stand of a motorcycle, with the advantages that in case of lack of pressure in the hydraulic circuit the stand is free in its movement towards the rest position in which it remains as if the device does not exist. Furthermore, the actuator makes easier the lowering step of the vehicle from the stand, even the lowering from the stand is possible also in traditional way.

## Description

### Field of the invention

The present invention relates to the field of motorcycles and more precisely it relates to a device for actuating the stand of motorcycles.

In particular, the invention relates to a improved actuating device that allows, in addition to lifting the vehicle on the stand, also to operate the stand in the sense opposite to that of lifting thus making easier also the manoeuvre of lowering.

### Description of the prior art

In motorcycles and in scooterss the manoeuvre of lifting the vehicle on the stand requires always a certain physical force and is often tough.

An actuator is known that solves the problem, as described in WO9947407, in the name of the same applicant, with an electro-hydraulic drive system. This system is based on a flow control valve that operates an actuator emptying the latter at the end of the manoeuvre or in case of interruption of the lifting manoeuvre.

In big motorcycles and in some types of scooters, where the driver are tied by special safety belts, the need of a drive is felt that makes easier the lowering of the vehicle from the stand.

This need is felt much more in the case of sloped parkings; in this case in fact the effort for lowering the vehicle from the stand is much higher.

Tipically, the moment of the load on the stand with respect to the axis of the articulation of the stand same is responsive to the angle of rotation is zero some degrees before the position of vehicle on the stand, and then it changes sign making the standing position steady. When lowering the vehicle from the stand, for this reason, it is necessary a short movement for reaching the dead point after which the vehicle lowers spontaneously.

### Summary of the invention

Object of the present invention is to provide a device for actuating the stand of motorcycles that is driven electro-hydraulically and operates the stand for lifting, and that it further makes easier the lowering step of the vehicle from the stand, even allowing a normal lowering step of the stand.

It is particular object of the present invention to provide an actuator that operates the stand in all the manoeuvre of lifting and allows also the reverse manoeuvre in order to rotate the stand from the position of vehicle on the stand up to when the vehicle lowers spontaneously.

It is particular object of the present invention to provide an actuator that keeps the stand free of moving between the two positions of vehicle on the stand up to the rest position independently from the actuator, leaving substantially the same functionalities of a traditional stand.

Object of the present invention is also to provide a electro-hydraulic circuit for stand of motorcycles that can be used for said actuating device.

These and other objects are achieved by the actuating device as defined in the attached claims.

According to the invention, then, a device for actuating the rotation of a stand of a motorcycle comprises at least a hydraulic actuator operating an actuating member between a first and a second position, by a hydraulic flow control circuit, so that the stand is in any case moved back to rest position independently from the actuating member. The characteristic of the device is that when the stand is in the standing position and the actuating member turned back to the first position means are provided operated by the actuator the actuator for starting the return rotation of the stand from the standing position to the rest position up to a point wherein it is not necessary bear the weight of the vehicle for carrying out the rotation.

Preferably , the actuator is a hydraulic cylinder comprising a piston and the actuating member is a stem sliding in the stand and connected to the piston, the stem moving between an extended position corresponding to the first position to a retracted position , whereby the stand brought to the standing position by pulling through the stem by an abutting end of the latter.

Advantageously, the means for starting the return rotation of the stand comprise in the cylinder a pushing element having a tubular portion sliding coaxially on the stem and having an end external to the cylinder suitable for urging a lever integral to the stand, the piston pushing the stand independently from the stem by pressure against the pushing element.

The pushing element has preferably a head suitable for urging the piston and resilient means set between the head and the bottom of the cylinder that oppose the movement of the tubular portion towards the stand.

The actuator can be a hydraulic cylinder comprising a piston and the actuating member is a stem sliding in the stand and connected to the piston, the stem moving between an extended position corresponding to the second position to a retracted position , whereby the stand is brought to the standing position by the stem through a first abutment that pushes the stand.

The means for starting the return rotation of the stand comprise a second abutment provided at the end of the stem distanced by the first abutment, whereby the stem pushes by the first abutment causing the stand from the rest position to the standing position and pulls by the second abutment causing the back stroke of the stand towards the rest position, the distance between the first and second abutment allowing to the stand to complete the movement of back stroke to the rest position independently by the piston.

### Brief description of the drawings

Further characteristics and the advantages of the actuating device and of the valve according to the present invention will be made clearer with the following description of an embodiment thereof, exemplifying but not limitative, with reference to attached drawings wherein:
- figure 1 shows a diagrammatical example not limitative of application to a motorcycle of an actuator according to the invention;
- figure 2 shows an actuator according to the invention for a stand of a motorcycle with stem pulling in direct phase of lifting;
- figures 3 and 4 show two operative positions of the stand of figure 1;
- figure 5 is a diagrammatical view of the hydraulic actuating circuit of the actuating device of figure 1;
- figure 6 is an actuator pushing that can be used alternatively to actuating of figure 2 with the same hydraulic circuit of figure 5, by exchanging the inlet and emptying outlet of the oil;
- figure 7 is an embodiment of the circuit of figure 5 applied always to the stand of figure 1;
- figure 8 is an embodiment of the circuit of figure 5 applied always to the stand of figure 1 or to the stand of figure 6;
- figures 9A and 9B show two operative positions of an embodiment of the stand of figure 6.

### Description of a preferred embodiment

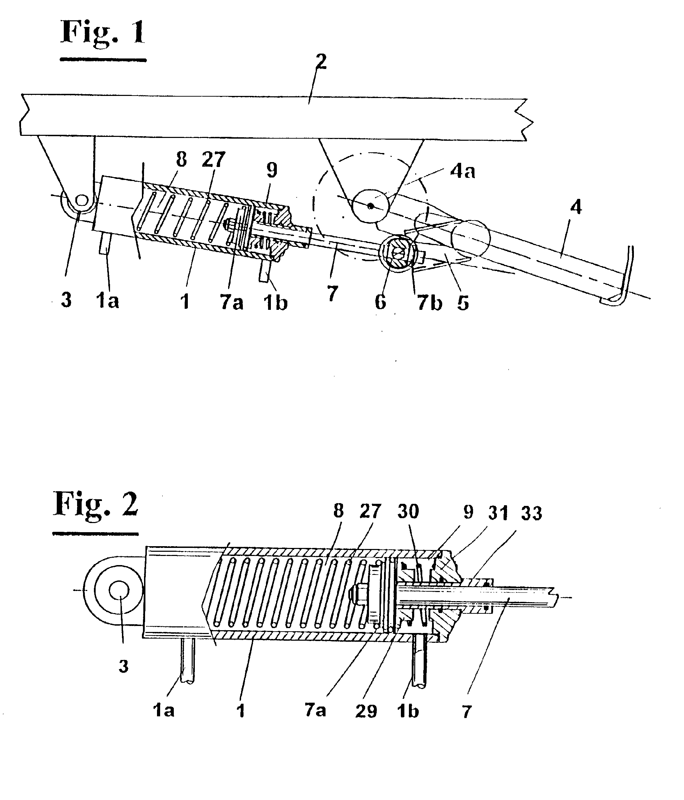

With reference to figure 1, according to the present invention, an actuating cylinder 1 is connected at an end to the frame 2 of a motorcycle through a hinge 3, and at the other end to a stand 4.

More precisely, to stand 4 a fork lever 5 is integral, in the present example angled with respect to the plane of the stand, in which a cylindrical pivot 6 can rotate. The actuating cylinder 1 is associated to a stem 7 sliding in pivot 6. Stem 7 has at the respective ends a piston 7a sliding in cylinder 1 and a abutment head 7b that stops the stem stroke against pivot 6.

With reference also to figure 2, piston 7a separates two chambers 8 and 9 in cylinder 1, in communication with respective mouths 1a and 1b of passage of inlet or outlet oil from/towards a circuit shown hereinafter. In chamber 8 a spring 27 is present that pushes piston 7a towards mouth 1b and then stem 7 out from cylinder 1. In chamber 9 is present instead a plate 29 connected to a bush 33 free of sealingly sliding in the end wall 31 of cylinder 1 and in which in turn sealingly slides stem 7. The movement of plate 29 towards the end wall 31 is biased by a spring 30.

For lowering stand 4 from the rest position of figure 1 up to the position of lifted vehicle shown in figure 2, the same system is used as described in WO9947407, in the name of the same applicant.

In summary, head 7b abuts against pivot 6 when the pressure of the oil delivered into chamber 9 through mouth 1b moves piston 7a, with stem 7 to it integral, towards the left direction of figure 2, so that stem 7, through head 7b and pivot 6, pulls lever 5 up to full rotation of the stand with respect to the frame 2.

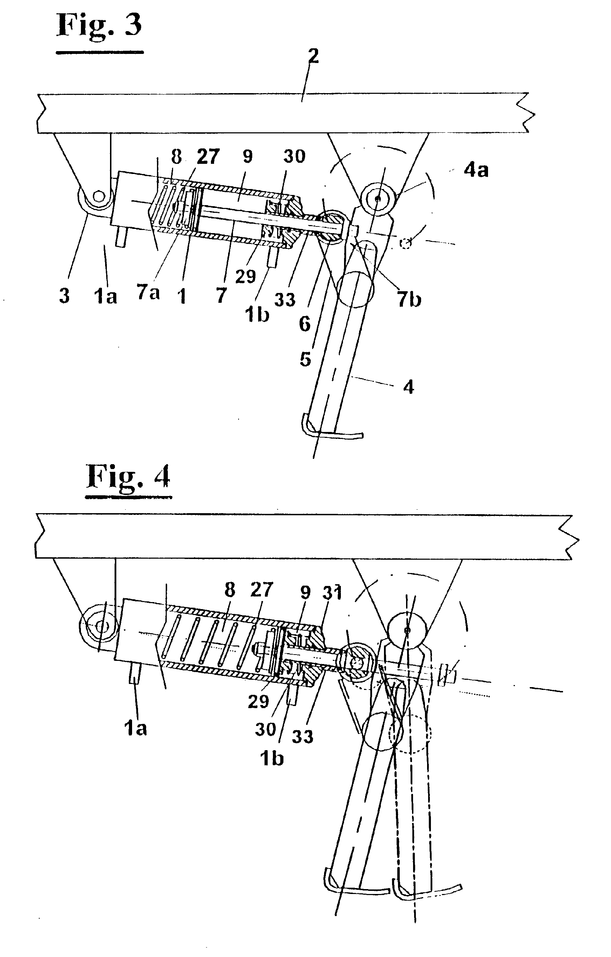

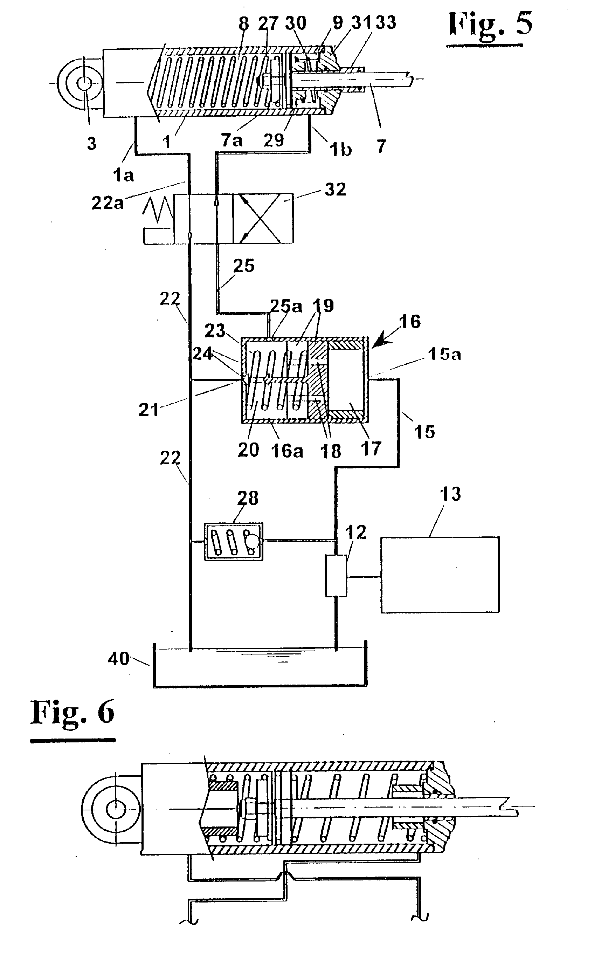

When the flow of oil ceases, the hydraulic circuit, in the way hereinafter shown in figure 5, automatically discharges the oil and allows to the piston 1a, pushed by spring 27 present in chamber 8, to move back to the starting position, shown in figure 4. In this case, stand 4 is independent from the actuator and the motorcycle can be lowered like motorcycles not equipped with this device.

According to the present invention, starting from the position of figure 4 indicated with continuous line, when the oil is delivered in pressure to chamber 8 through mouth 1a, and chamber 9 is discharged through mouth 1b, piston 7a pushes, by plate 29, bush 33 against lever 5 and then moves stand 4 away from its position of lifted vehicle, indicated with continuous line. In particular, the stroke of bush 33 allows stand 4 to move beyond the dead point, indicated with dotted line always in figure 4, after that the vehicle 2 lowers spontaneously. When the flow rate of oil ceases, the biasing spring 30 returns bush 33 to the position shown in figure 1, independently from the movement of the stand.

Spring 30, not necessarily present, allows however to keep the bush in chamber 9 and then protected during the run of the vehicle.

With reference to figure 5, a possible hydraulic circuit comprises a positive displacement pump 12 which, operated by an electrical motor 13, delivers pressurised oil through the duct of delivery 15, into a special flow control valve 16.

Valve 16 comprises, as known from WO9947407, a chamber 17 and a chamber 20 separate by a piston 19 with holes 18. The piston 19 is pushed towards the chamber 17 by a spring 23 and has a needle 24 suitable for engaging in the outlet 21 stopping it. Chamber 20 has an outlet 21 connected with a duct 22 for discharging reservoir 40, and a side outlet duct 25, through a mouth 25a, of delivery of oil in pressure towards an electro-distributor 32, which has two positions for allowing oil in pressure to be delivered to the chambers 9 and 8 of the cylinder, in order to carry out the two lifting and lowering movements. In the lifting manoeuvre, preferably, the electro-distributor 32 is not triggered, and operates like in WO9947407. For the lowering manoeuvre the electro-distributor is triggered when starting the pump delivering oil in pressure into chamber 8 and discharging the chamber 9.

The reservoir 40 is preferable since the two chambers of the cylinder 9 and 8 are alternatively pressurized for lifting and for lowering the stand, since air cannot be put in the two chambers, as described instead in WO9947407.

In both the positions of electro-distributor 32, at start of motor 13 the pump 12 delivers oil in pressure into chamber 17 through duct 15. The oil, through the holes 18 of piston 19, passes through chamber 20 of valve 16 and, through hole 21, can go back to reservoir 40 through discharge duct 22. The discharge flow ceases however immediately automatically because the pressure loss to which the flow of oil is subject when crossing holes 18 of piston 19 creates on the piston same a force which, by overcoming the reaction of spring 23, moves it towards chamber 20 so that needle 24 can stop hole 21.

Being discharge flow 22thus discontinued, the oil in pressure is necessarily delivered, through mouth 25a of chamber 20 and through duct 25, to electro-distributor 32. In the position of figure 5 of the valve of electro-distributor 32 the oil in pressure is delivered into chamber 9 of the actuating cylinder, pushing thus the piston of stem 7 towards chamber 8 and lifting the vehicle 2 as shown in figure 3. In the triggered position of the valve of electro-distributor 32, instead, the oil in pressure is delivered to chamber 8 of the actuating cylinder 1, thus pushing piston 7a against the plate 29 thus lowering the vehicle from the stand, as shown in figure 4.

In both cases, while piston 7a is moving, the pressure loss of oil towards chamber 9 of actuator 1 through the holes 18 of piston 19 continues to keep the mouth 21 closed by needle 24, and the pressure of the oil that acts on the head of the needle 24 same cooperates to this action.

When motor 13 stops, either because piston 7a is at the end of its stroke, or because the user interrupts the manoeuvre, the flow of oil through duct 25 ceases and spring 23 quickly returns back piston 19, freeing the mouth 21 from needle 24. Contemporaneously, spring 27 returns piston 7a gradually back and stem 7 again to the position of figure 1, when stand 4, already, is in the steady position and holds the vehicle 2 standing. If the action of lifting is discontinued before that the stand reaches the dead point , instead, the weight of the vehicle brings the stand spontaneously to the position of figure 1.

Between the ducts of discharge 22 and of delivery 15 is advantageously provided a safety valve 28 adjusted to a maximum operating pressure.

Notwithstanding reference has been made to an actuator 1 that moves stand 4 by pulling stem 7, it is obviously possible to provide in a way completely equivalent an actuator that works pushing the stem for moving the stand from the rest position to the lifting position and vice versa. As shown in figure 6, in fact, it is possible to use a pushing actuator with the same hydraulic circuit of figures 5 or 6, by reversing the oil inlet and discharge ducts.

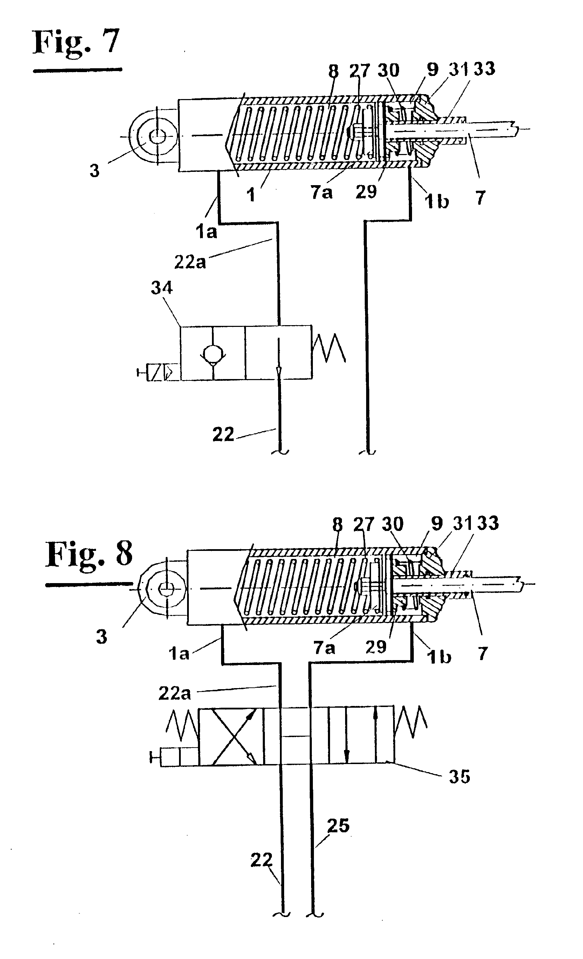

Another possible hydraulic layout is shown in figure 7. It is similar to that of figure 5, with the difference that the duct 25 that leads to mouth 1b is always free, whereas the duct 22a that comes from the mouth 1a and leads to the discharge duct 22, is controlled by electro-valve 34. In this case, the manoeuvre of lifting is not changed with respect to the previous case. For lowering, the electro-valve 34 is triggered and, by delivering oil in pressure into chamber 9, piston 7a cannot move (being chamber 8 closed) and plate 29 with bush 33, behaving as a sinking piston, pushes pivot 6 and rotates the stand beyond the dead point .

The advantage of this layout is a much simpler hydraulics, but the effective cross section area and then the load available for lowering is much lower, since it is equal to the area of the circular corona of the cross section of bush 33.

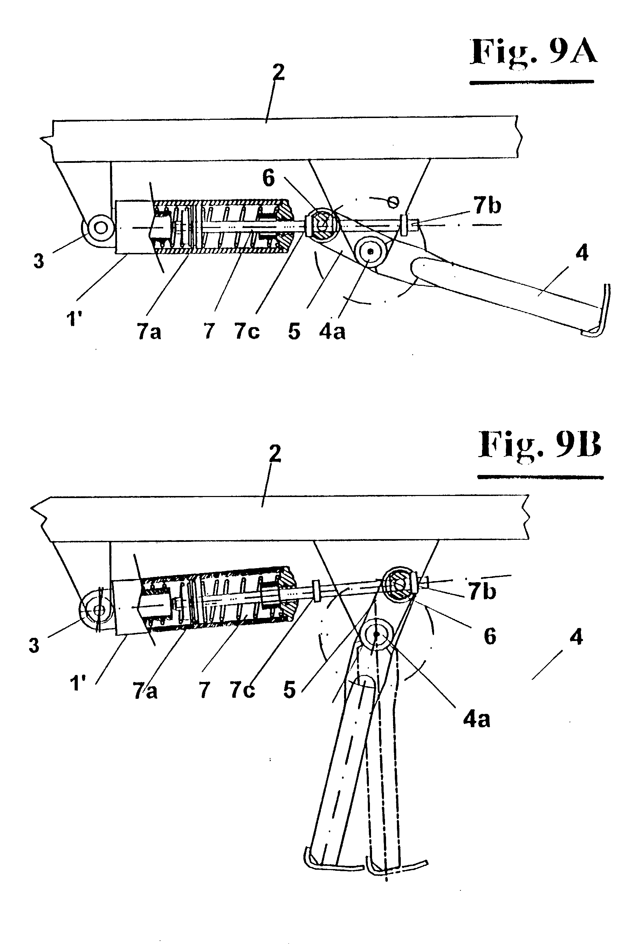

Another possible hydraulic layout, suitable always for actuating in the way of figures from 1 to 4, is shown in figure 8. A type of electro-distributor with three positions is indicated with 35. In particular, both the duct 25 of delivery of the pump and the mouths 1a and 1b of the actuator discharge the reservoir by duct 22 when the electro-distributor 35 is not triggered. In this situation, the stand works as if the actuator were not present and it can be raised or lowered in a traditional way. For the lifting or the lowering steps the electro-distributor is triggered in the two possible directions putting the circuit in the conditions already described according to figure 5.

As shown in figures 9A and 9B, a diagrammatical view of the stand suitable to a pushing actuator when lifting, as that of figure 6, has lever 5 at opposite sides of stand 4 with respect to hinge 4b. In this case an actuator 1' is provided that for lifting the vehicle 2must push instead of pulling. In this case the mechanical layout for lowering of the vehicle from the stand provides on stem 7 both a pawl 7b and a pawl 7c. This way, referring to figure 8, when lifting stem 7 pushes the stand by pawl 7c, whereas for lowering stem 7 pulls the stand by pawl 7b for small rotation up to the dead point of figure 9. The hydraulic circuit for this type of layout can be that of figure 5, by reversing the links to the mouths 1a and 1b, as shown in figure 7.

Notwithstanding reference has been made to a stand with front actuator with respect to the direction of running with respect to the stand same and in position substantially horizontal, it is possible also that, remaining always within the scope of the present invention, the actuator is arranged rearwardly with respect to the stand or arranged vertically or obliquely with respect to the stand. In such different situations, the position of fastening of pin 6 can be changed and pulling or pushing actuators can be used, in a way obvious for a man of the art.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Actuating device (1) of the rotation of a stand of a motorcycle, said stand (4) being pivotally connected (4b) to said motorcycle (2) between a standing position and a rest position folded under the vehicle, comprising at least one hydraulic actuator (1) operating an actuating member (7) between a first and a second position, said actuating member (7) when passing from said first to said second position engaging with said stand (4) up to bringing it respectively from the rest position to the standing position, a flow control hydraulic circuit being provided that delivers liquid in pressure to said actuator (1) for moving said actuating member (7) from said first to said second position and allows the back stroke of said actuating member (7) to said first position when the flow of said liquid ceases, whereby said stand (4) can be brought back to said rest position independently from said actuating member (7),
**characterised in that**
when said stand is in said standing position and said actuating member (7) has turned back to said first position means are provided operated by said actuator (1) for starting the return rotation of said stand (4) from said standing position to said rest position up to a point wherein it is not necessary bear the weight of the vehicle for carrying out the rotation.

2. Actuating device according to claim 1, wherein said actuator is a hydraulic cylinder (1) comprising a piston and said actuating member is a stem (7) sliding in said stand and connected to said piston, said stem moving between an extended position corresponding to said first position to a retracted position , whereby said stand (4) is brought to said standing position by pulling through said stem (7a) by an abutting end of the latter (7b).

3. Actuating device according to claim 2, wherein said means for starting the return rotation of said stand (4) comprise in said cylinder a pushing element (29) having a tubular portion (33) sliding coaxially on said stem (7) and having an end external to said cylinder suitable for urging a lever (5) integral to said stand, said piston (7a) pushing said stand independently from said stem by pressure against said pushing element (29).

4. Actuating device according to claim 3, wherein said pushing element has a head (29) suitable for urging said piston (7a) and resilient means set between said head and the bottom (31) of said cylinder (1) that oppose (29) the movement of said tubular portion (33) towards said stand.

5. Actuating device according to claim 1, wherein said actuator is a hydraulic cylinder (1) comprising a piston and said actuating member is a stem (7) sliding in said stand and connected to said piston, said stem moving between an extended position corresponding to said second position to a retracted position , whereby said stand is brought to said standing position pushed by said stem through a first abutment that pushes said stand.

6. Actuating device according to claim 5, wherein said means for starting the return rotation of said stand (4) comprise a second abutment provided at the end of said stem distanced from said first abutment, whereby said stem pushes by said first abutment causing the stand to move from said rest position to the standing position and pulls by said second abutment causing the back stroke of said stand towards said rest position, the distance between said first and second abutment allowing the stand to complete the movement of back stroke to said rest position independently from said piston.

7. Actuating device according to claim 1, wherein said flow control hydraulic circuit comprises a flow control valve (16) connected with a first (1a) and a second mouth (1b) of passage of liquid of said hydraulic actuator (1) , said means for starting the back rotation of said stand comprising an electro-distributor associated to said hydraulic circuit.
